# EUROPEAN PATENT APPLICATION

(11) **EP 4 818 754 A1**
(43) Date of publication of application: **07.10.2026**
(21) Application number: 24897050.1
(22) Date of filing: 24.09.2024
(51) Int. Cl.: G01S 17/10, G01C 3/06, G01S 7/4865

(54) **DISTANCE MEASURING DEVICE AND DISTANCE MEASURING METHOD**

(30) Priority: 30.11.2023 JP 2023202864
(71) Applicant: PANASONIC INTELLECTUAL PROPERTY MANAGEMENT CO., LTD., Kadoma-shi, Osaka 571-0057 (JP)
(72) Inventor: SUENAGA Kiyoyuki, Kadoma-shi, Osaka 571-0057 (JP); HOSOKAWA Tetsuhisa, Kadoma-shi, Osaka 571-0057 (JP); KAWABUCHI Kenichiro, Kadoma-shi, Osaka 571-0057 (JP); ASAHI Hitoshi, Kadoma-shi, Osaka 571-0057 (JP); YAMAMURA Koichi, Kadoma-shi, Osaka 571-0057 (JP); HORI Katsuo, Kadoma-shi, Osaka 571-0057 (JP); SAGATA Shingo, Kadoma-shi, Osaka 571-0057 (JP); MORIDERA Hiroshi, Kadoma-shi, Osaka 571-0057 (JP); SHIRAMIZU Takahisa, Kadoma-shi, Osaka 571-0057 (JP); YAMAGUCHI Sotaro, Kadoma-shi, Osaka 571-0057 (JP)
(74) Representative: SSM Sandmair
(86) International application number: PCT/JP2024/033864
(87) International publication number: WO 2025/115359

(57) **Abstract**

This distance measuring device comprises a light emitting element that projects pulse wave projected light, a light receiving element that receives reflected light, and a controller that measures the distance to an object on the basis of the time between a light emission timing of the light emitting element and a light reception timing of the light receiving element, wherein, among a measured first distance, at least one second distance measured after the first distance, and a third distance measured after the second distance, if the first distance and the third distance are estimated not to be abnormal and the second distance is estimated to be abnormal, the controller uses the first distance or the third distance to complement the second distance.

## Description

### TECHNICAL FIELD

The present disclosure relates to a distance measurement device and a distance measurement method.

### BACKGROUND ART

There is known a distance measurement device that transmits a pulse wave, measures a time required for a reflected wave to return, and calculates a distance to an object. Patent Literature 1 discloses a distance measurement device including a transmission unit configured to transmit a pulse wave; a reception unit configured to receive a reflected wave reflected by an object; a time measurement unit configured to measure a required time from transmission of the pulse wave to detection of the reflected wave; a pulse width measurement unit configured to take in a reception waveform of the reflected wave by the reception unit and measure a pulse width of the reception waveform; a correction value calculation unit configured to calculate a correction value of a required time corresponding to the pulse width of the reception waveform based on input/output characteristics of an active region and a saturation region in the reception unit; and a distance calculation unit configured to correct the required time measured by the time measurement unit using the correction value and calculate a distance to the object by multiplying a propagation speed of the pulse wave.

### CITATION LIST

### PATENT LITERATURE

Patent Literature 1: JPH08-179032A

### SUMMARY OF INVENTION

### TECHNICAL PROBLEM

Since a level of the reception waveform of the actual reflected wave varies, a comparator may not be able to perform a normal binarization operation on the reception waveform at a level near a threshold, and may output an abnormal signal. The distance to an object calculated using such an abnormal signal has low reliability and may be erroneous. That is, an erroneous distance may be output.

An object of the present disclosure is to provide a technique for preventing a distance measurement device from outputting an erroneous distance.

### SOLUTION TO PROBLEM

A distance measurement device according to an embodiment including: a light emitting element configured to project projection light of a pulse wave; a light receiving element configured to receive reflection light of the projection light reflected by an object; and a controller configured to measure a distance to the object based on a time between a light emission timing of the light emitting element and a light reception timing of the light receiving element, in which among a first distance that is measured, at least one second distance measured after the first distance, and a third distance measured after the second distance, when the first distance and the third distance are estimated to be not abnormal and the second distance is estimated to be abnormal, the controller complements the second distance using the first distance or the third distance.

A distance measurement method according to an embodiment is a distance measurement method for measuring a distance to an object based on a time between a light emission timing at which a light emitting element projects projection light of a pulse wave and a light reception timing at which a light receiving element receives reflection light of the projection light reflected by the object, the method including: among a first distance that is measured, at least one second distance measured after the first distance, and a third distance measured after the second distance, when the first distance and the third distance are estimated to be not abnormal and the second distance is estimated to be abnormal, complementing the second distance using the first distance or the third distance.

### ADVANTAGEOUS EFFECTS OF INVENTION

According to the present disclosure, it is possible to prevent a distance measurement device from outputting an erroneous distance.

### BRIEF DESCRIPTION OF DRAWINGS

FIG. 1 is an external perspective view of a distance measurement device according to a first embodiment.
FIG. 2 is a longitudinal cross-sectional view of the distance measurement device according to the first embodiment.
FIG. 3 is a block diagram illustrating a functional configuration example of the distance measurement device according to the first embodiment.
FIG. 4 is a diagram illustrating a signal input to a comparator according to the first embodiment and a signal output from the comparator.
FIG. 5 is a block diagram illustrating a functional configuration example of TDC according to the first embodiment.
FIG. 6 is a diagram illustrating a method for measuring TOF and a light reception pulse width by the TDC according to the first embodiment.
FIG. 7 is a diagram illustrating operation conditions under which the TDC according to the first embodiment can normally measure the TOF and the light reception pulse width.
FIG. 8 is a diagram illustrating a minimum object whose distance may be measured according to the first embodiment.
FIG. 9 is a flowchart illustrating a processing example of a controller according to the first embodiment.
FIG. 10 is a diagram illustrating a complementation method when an abnormality flag is associated with a second object distance according to the first embodiment.
FIG. 11 is a diagram illustrating a storage example of a first object distance, the second object distance, and a third object distance in a storage unit according to the first embodiment.
FIG. 12 is a diagram illustrating an operation example when two or more abnormality flags are associated continuously according to the first embodiment.

### DESCRIPTION OF EMBODIMENTS

Hereinafter, an embodiment of the present disclosure will be described in detail with reference to the drawings as appropriate. However, unnecessarily detailed description may be omitted. For example, detailed description of already well-known matters and redundant description of substantially the same configuration may be omitted. This is to avoid unnecessary redundancy of the following description and to facilitate understanding of those skilled in the art. The accompanying drawings and the following description are provided for those skilled in the art to sufficiently understand the present disclosure, and are not intended to limit the subject matter described in claims.

### (First Embodiment)

### <Physical Configuration of Distance Measurement Device>

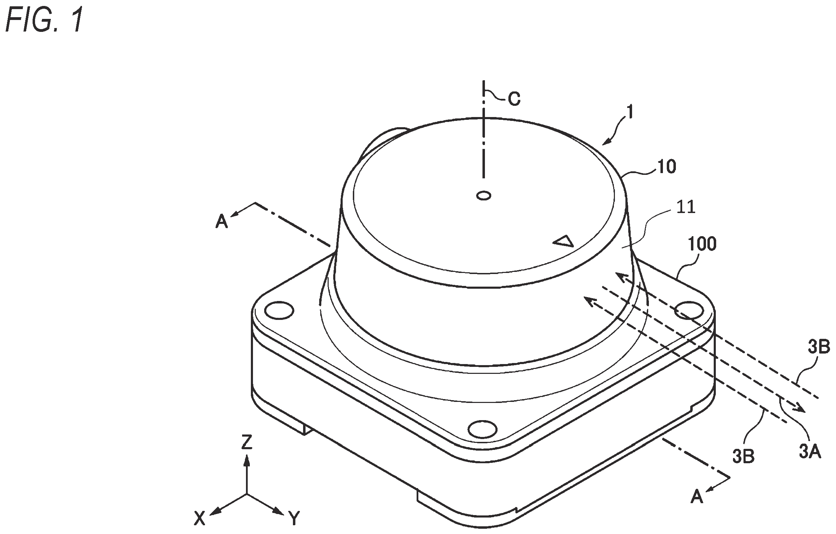

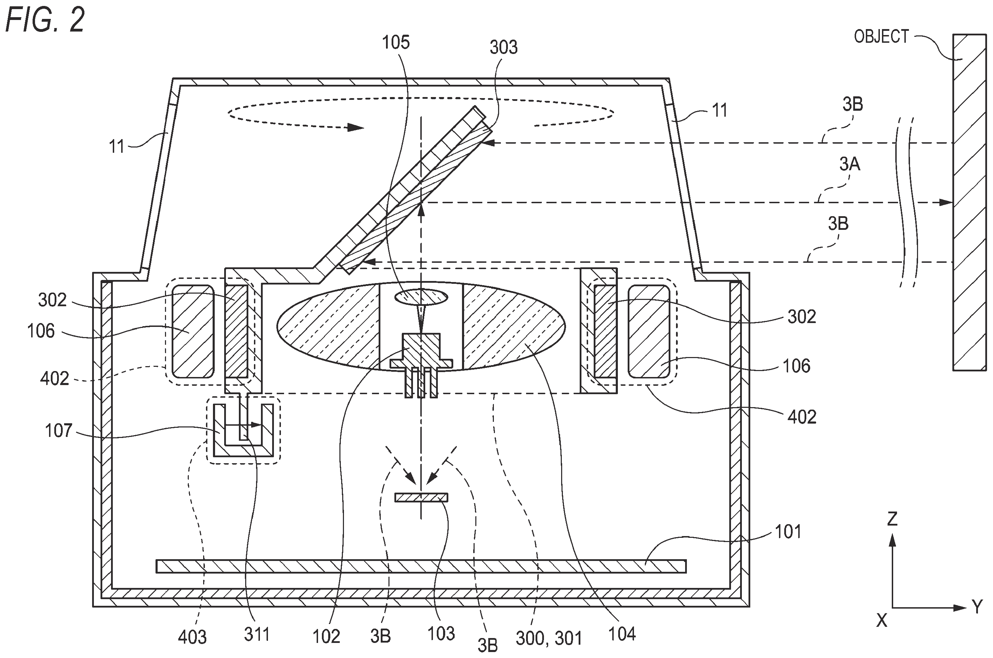

FIG. 1 is an external perspective view of a distance measurement device 1 according to a first embodiment. FIG. 2 is a longitudinal cross-sectional view of the distance measurement device 1 according to the first embodiment. FIG. 2 corresponds to an A-A cross-sectional view of the distance measurement device 1 illustrated in FIG. 1.

As illustrated in FIGS. 1 and 2, the distance measurement device 1 includes a fixed part 100, a rotation part 300, and an outer cover 10.

The fixed part 100 has a substantially rectangular parallelepiped shape. The rotation part 300 is connected to an upper surface of the fixed part 100 and has a cylindrical shape that rotates about an axis perpendicular to the upper surface as a rotation axis C. The outer cover 10 has a substantially cylindrical shape and covers the rotation part 300 from above. At least a part of a side surface of the outer cover 10 has a wavelength window 11 implemented using a wavelength selection member. The wavelength selection member is a material that transmits light of a predetermined wavelength (frequency) component used for distance measurement and that blocks light of a wavelength (frequency) component in a visible region. The wavelength selection member has a function of blocking ambient light such as natural light or electric light.

For convenience of description, as illustrated in FIG. 1, an axis perpendicular to the upper surface (or bottom surface) of the fixed part 100 is defined as a Z axis. An axis perpendicular to the Z axis is defined as an X axis. An axis perpendicular to the Z axis and the X axis is defined as a Y axis. For convenience of description, a positive direction of the Z axis may be referred to as "upper", a negative direction of the Z axis may be referred to as "lower", and a direction away from the Z axis in an X axis direction or a Y axis direction may be referred to as "lateral". Expressions related to these directions are used for convenience of description, and are not intended to limit a posture of the structure in actual use. For example, the distance measurement device 1 illustrated in FIG. 1 may be used upside down. The A-A cross-sectional view illustrated in FIG. 2 corresponds to a cross-sectional view of a YZ plane.

The bottom surface of the fixed part 100 may be fixedly provided on a predetermined plane (for example, floor surface or housing surface of predetermined device).

The rotation part 300 rotates about a center axis in a height direction (Z axis) of the cylinder as the rotation axis C. With the rotation of the rotation part 300, an optical axis of projection light (hereinafter referred to as projection light 3A) projected from a part of the side surface of the rotation part 300 in a lateral direction rotates about the rotation axis C. Along with this, the projection light 3A and an area in which distance measurement may be performed with the projection light 3A (hereinafter, referred to as distance measurement area) also rotate. As will be described later, the distance measurement device 1 measures a distance to an object present in the distance measurement area based on a time of flight (TOF) between a timing at which the projection light 3A is projected and a timing at which the projection light 3A is received as light reflected by the object in the distance measurement area (hereinafter referred to as reflection light 3B). The rotation part 300 makes one round around the rotation axis C, so that the distance measurement device 1 can measure a distance to an object present in the distance measurement area of 360 degrees around the lateral direction.

The fixed part 100 includes a board 101, a light emitting element 102, a light receiving element 103, a focus lens 104, a collimator lens 105, a coil 106, and a photointerrupter 107. The rotation part 300 includes a rotation member 301, a magnet 302, and a reflecting mirror 303.

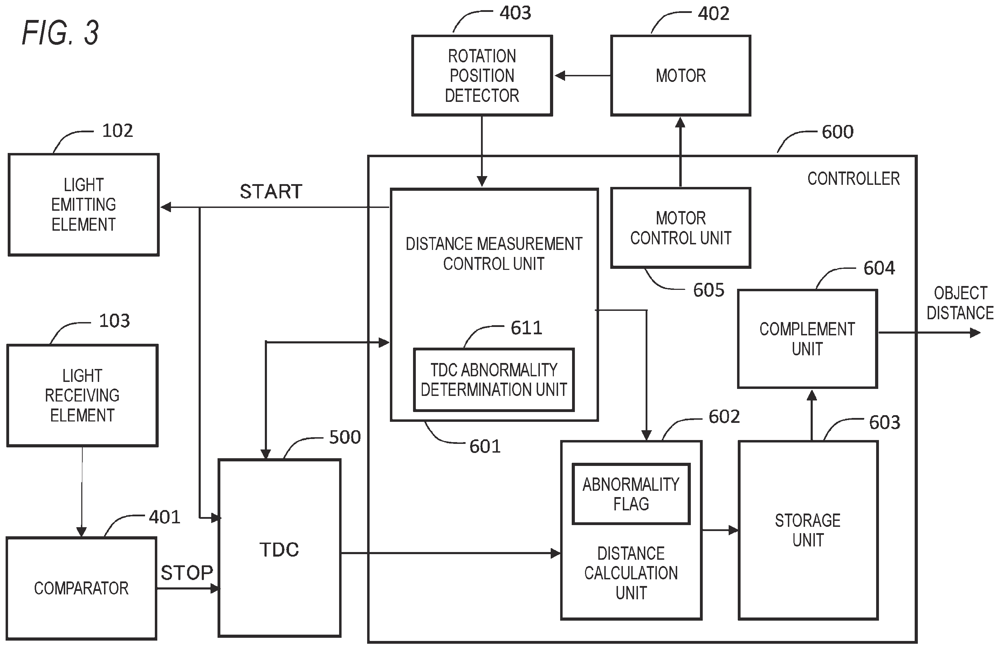

A motor 402 that is hollow (see FIG. 3) is formed by the coil 106 of the fixed part 100 and the magnet 302 of the rotation part 300, and the rotation part 300 rotates about the rotation axis C by being driven by the motor 402.

The board 101 is, for example, a printed circuit board (PCB), and includes a comparator 401, a TDC 500, and a controller 600 (see FIG. 3), which will be described later. TDC is an abbreviation for Time to Digital Converter.

The light emitting element 102 is disposed along the rotation axis C and projects the projection light 3A upward.

The collimator lens 105 corrects the projection light 3A projected from the light emitting element 102 to substantially parallel light and outputs the substantially parallel light upward.

The reflecting mirror 303 is provided in the rotation member 301 to reflect, in the lateral direction (direction along XY plane), the parallel light projected upward from the light emitting element 102 and corrected by the collimator lens 105. Since the reflecting mirror 303 rotates together with the rotation member 301, the projection light is projected (scanned) at 360 degrees around the rotation axis C in a direction orthogonal to the rotation axis C (lateral direction) with the elapse of time. The projection light 3A reflected by the reflecting mirror 303 passes through the wavelength window 11 of the outer cover 10 and is projected to the distance measurement area.

The reflection light 3B obtained by the projection light 3A being reflected by the object passes through the wavelength window 11 of the outer cover 10 and is reflected downward by the reflecting mirror 303.

The focus lens 104 focuses the reflection light 3B reflected downward by the reflecting mirror 303 and outputs the reflection light 3B downward.

The light receiving element 103 receives the reflection light 3B focused by the focus lens 104.

The rotation member 301 includes a plurality of ribs 311 at constant intervals. The photointerrupter 107 is disposed to be able to detect passage of one rib 311. By detecting and counting the passage of one rib 311 using the photointerrupter 107, the controller 600 described later can detect a rotation position (rotation angle) of the rotation member 301 (that is, rotation part 300). Therefore, the photointerrupter 107 and the ribs 311 can constitute a rotation position detector 403 (see FIG. 3) described later.

### <Functional Configuration of Distance Measurement Device>

FIG. 3 is a block diagram illustrating a functional configuration example of the distance measurement device 1 according to the first embodiment.

The distance measurement device 1 includes the light emitting element 102, the light receiving element 103, the comparator 401, the TDC 500, the motor 402, the rotation position detector 403, and the controller 600. The configuration illustrated in FIG. 3 is an example, and at least one of the comparator 401 and the TDC 500 may be included in the controller 600.

The light emitting element 102 projects the projection light 3A of a pulse wave corresponding to the received pulse signal (hereinafter referred to as input pulse signal). In FIG. 3, the input of the input pulse signal is expressed as START. The projection light 3A may be read as laser light or a beam. The light receiving element 103 receives the reflection light 3B as described above and outputs a light reception signal corresponding to a light reception level.

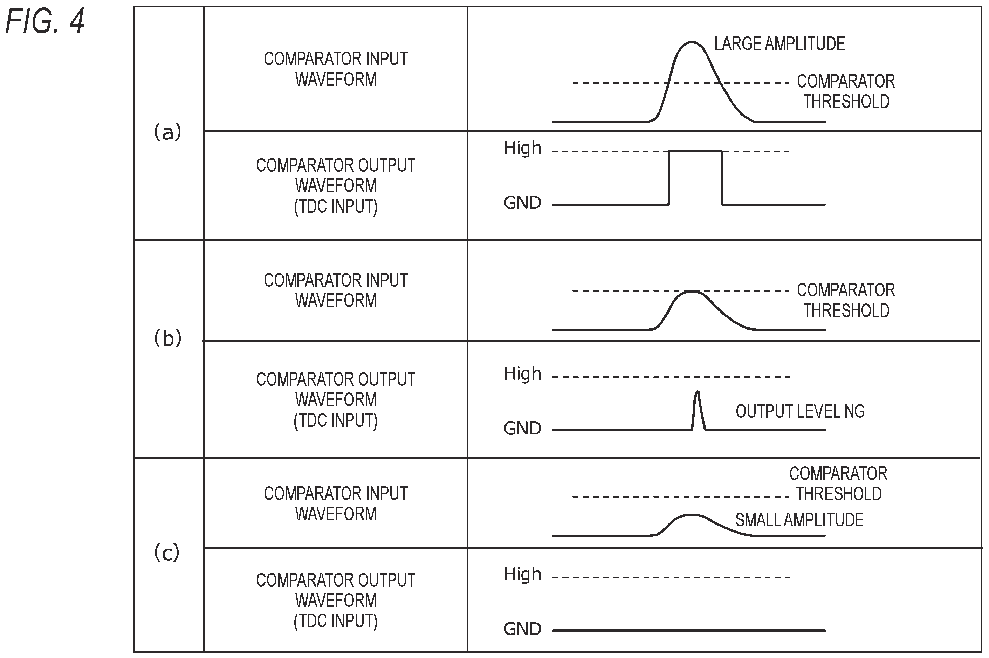

FIG. 4 is a diagram illustrating a signal input to the comparator 401 and a signal output from the comparator 401 according to the first embodiment. Next, the comparator 401 will be described with reference to FIG. 4.

As illustrated in (a) of FIG. 4, the comparator 401 receives the light reception signal from the light receiving element 103 and outputs a pulse signal having a predetermined High level during a period in which the level of the light reception signal is equal to or higher than a predetermined comparator threshold and a predetermined GND level during a period in which the level of the light reception signal is lower than the comparator threshold (hereinafter, referred to as light reception pulse signal). The High level is larger than the GND level. In FIG. 3, output of the light reception pulse signal is expressed as STOP.

When the level of the received light reception signal is lower than the comparator threshold over the entire period, the comparator 401 outputs the light reception pulse signal at the GND level as illustrated in (c) of FIG. 4.

However, when a maximum value of the level of the received light reception signal is near the comparator threshold, the comparator 401 may output a light reception pulse signal having an abnormal waveform in which either the high level or the GND level is incomplete as illustrated in (b) of FIG. 4. In the present embodiment, a method of outputting a highly reliable distance measurement result even when the comparator 401 outputs a light reception pulse signal having such an abnormal waveform will be described.

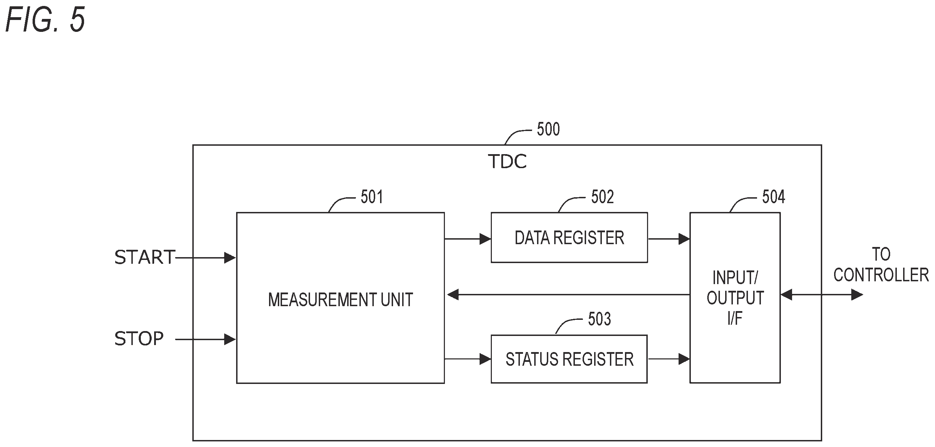

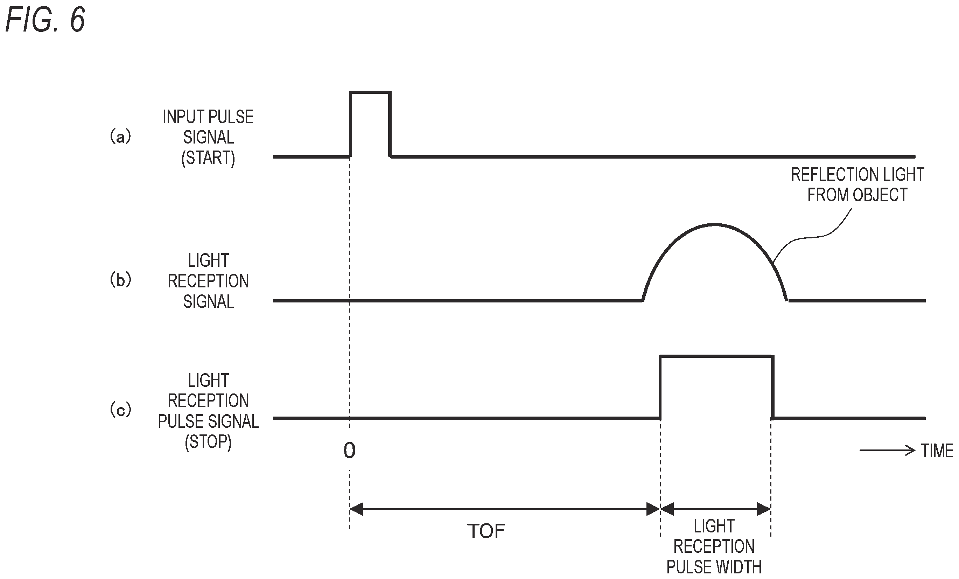

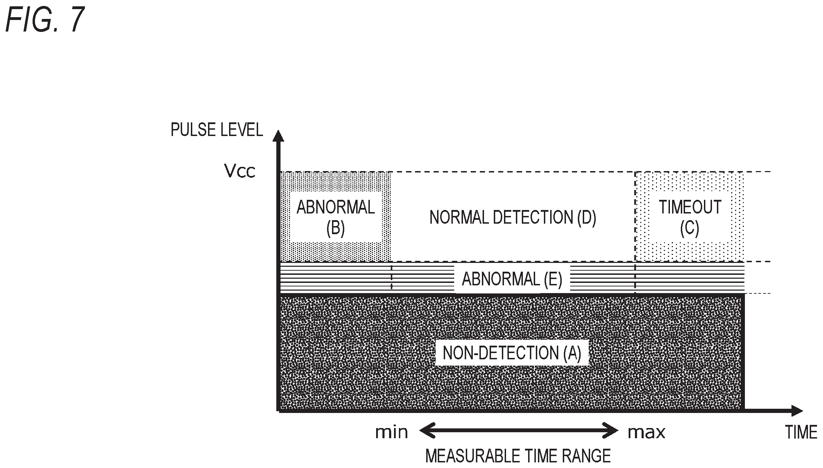

FIG. 5 is a block diagram illustrating a functional configuration example of the TDC 500 according to the first embodiment. FIG. 6 is a diagram illustrating a method for measuring the TOF and a light reception pulse width by the TDC 500 according to the first embodiment. FIG. 7 is a diagram illustrating operation conditions under which the TDC 500 according to the first embodiment can normally measure the TOF and the light reception pulse width. Next, the TDC 500 will be described with reference to FIGS. 5, 6, and 7.

The TDC 500 includes a measurement unit 501, a data register 502, a status register 503, and an input/output I/F 504. "I/F" is an abbreviation for interface.

The measurement unit 501 receives, at a timing when the input pulse signal is input to the light emitting element 102, the same input pulse signal as illustrated in (a) of FIG. 6 (START). The comparator 401 receives the light reception signal as illustrated in (b) of FIG. 6 from the light receiving element 103 and outputs the light reception pulse signal as illustrated in (c) of FIG. 6. The measurement unit 501 receives, at a timing when the comparator 401 outputs the light reception pulse signal, the light reception pulse signal as illustrated in (c) of FIG. 6 (STOP). The measurement unit 501 measures a time (that is, TOF) from a timing at which the input pulse signal is received to a timing at which the light reception pulse signal is received, and a pulse width of the light reception pulse signal (hereinafter, referred to as light reception pulse width). The measurement unit 501 writes the measured TOF and light reception pulse width in the data register 502. In addition, the measurement unit 501 writes operation information indicating an operation state at the time of the measurement to the status register 503. The operation information may include the number of rising edges and the number of falling edges of the input pulse signal and the number of rising edges and the number of falling edges of the light reception pulse signal. In addition, the operation information may include information indicating whether the light reception pulse signal is received (that is, whether timeout occurs) within a predetermined time from the timing at which the input pulse signal is received.

The input/output I/F 504 outputs measurement results of the TOF and the light reception pulse width written in the data register 502. The input/output I/F 504 outputs the operation information written in the status register 503 in response to an external request or together with output of the measurement results of the TOF and the light reception pulse width.

As illustrated in FIG. 7, the measurement unit 501 has an operation condition under which the TOF can be normally measured. In FIG. 7, a horizontal axis represents time, and a vertical axis represents a level of the light reception pulse signal.

As illustrated in an area A of FIG. 7, the measurement unit 501 does not detect the light reception pulse signal when the level of the light reception pulse signal is lower than a predetermined threshold.

As illustrated in an area B of FIG. 7, the measurement unit 501 performs abnormality measurement in a case where the time from the input of the input pulse signal to the input of the light reception pulse signal or the pulse width of the light reception pulse signal is shorter than a predetermined minimum value (min) when the level of the light reception pulse signal is equal to or higher than the predetermined threshold.

As illustrated in an area C of FIG. 7, the measurement unit 501 times out in a case where the time from the input of the input pulse signal to the input of the light reception pulse signal or the pulse width of the light reception pulse signal is longer than a predetermined maximum value (max) when the level of the light reception pulse signal is equal to or higher than the predetermined threshold.

As illustrated in an area D of FIG. 7, the measurement unit 501 can normally measure the TOF in a case where the time from the input of the input pulse signal to the input of the light reception pulse signal or the pulse width of the light reception pulse signal is between the predetermined minimum value (min) and the predetermined maximum value (max) when the level of the light reception pulse signal is equal to or higher than the predetermined threshold.

As illustrated in an area E of FIG. 7, the measurement unit 501 performs abnormal measurement when the level of the light reception pulse signal is near the predetermined threshold (see (b) of FIG. 4). In the present embodiment, such abnormality measurement prevents a distance measurement result with low reliability from being output.

The description returns to FIG. 3.

As described above, the motor 402 includes the coil 106 and the magnet 302, and causes the rotation member 301 to rotate about a central axis C.

As described above, the rotation position detector 403 includes the ribs 311 of the rotation member 301 and the photointerrupter 107, and outputs a start signal at a predetermined rotation angle resolution of the rotation part 300. The start signal is used as a signal indicating the light emission timing.

The controller 600 performs processing of calculating a distance to an object present in the distance measurement area (hereinafter referred to as object distance), processing of controlling the motor 402, and the like. The controller 600 includes a distance measurement control unit 601, a distance calculation unit 602, a storage unit 603, a complement unit 604, and a motor control unit 605.

The distance measurement control unit 601 receives the start signal from the rotation position detector 403. The distance measurement control unit 601 outputs a light emission pulse signal (START) to the light emitting element 102 and the TDC 500 at a timing when the start signal is received.

The distance measurement control unit 601 receives the measurement results of the TOF and the light reception pulse width from the TDC 500. The distance measurement control unit 601 acquires operation information corresponding to the received measurement results of the TOF and the light reception pulse width from the TDC 500.

The distance measurement control unit 601 includes a TDC abnormality determination unit 611. The TDC abnormality determination unit 611 determines (estimates) whether the measurement result is abnormal based on the measurement result itself of the TOF or the light reception pulse width or the operation information corresponding to the measurement result. For example, when the measurement result of the TOF or the measurement result of the light reception pulse width is out of a predetermined range, the TDC abnormality determination unit 611 determines (estimates) that the measurement results of the TOF and the light reception pulse width are abnormal. For example, when the number of rising edges and the number of falling edges of the light reception pulse signal do not match in the operation information, the TDC abnormality determination unit 611 determines (estimates) that the measurement results of the TOF and the light reception pulse width are abnormal. When it is determined (estimated) that the measurement result of the TOF or the light reception pulse width is abnormal, the TDC abnormality determination unit 611 outputs an abnormality flag indicating that the measurement results of the TOF and the light reception pulse width are abnormal to the distance calculation unit 602.

The distance calculation unit 602 receives the measurement results of the TOF and the light reception pulse width from the TDC 500. When the measurement results of the TOF and the light reception pulse width are abnormal, the distance calculation unit 602 receives the abnormality flag from the distance measurement control unit 601.

The distance calculation unit 602 calculates the object distance based on the measurement results of the TOF and the light reception pulse width. The time indicated by the TOF is the time (reciprocation time) from projection of the projection light 3A to reception of the reflection light 3B, and corresponds to approximately twice the time until the projection light 3A reaches the object. Therefore, the distance calculation unit 602 first calculates a basic distance (referred to as edge distance) by (propagation speed of projection light 3A × TOF/2). Next, the distance calculation unit 602 calculates the object distance by correcting the edge distance according to the measurement result of the light reception pulse width at this time.

The distance calculation unit 602 stores the calculated object distance in the storage unit 603. At this time, when an abnormality flag is associated with the measurement results of the TOF and the light reception pulse width used for the calculation of the object distance, the distance calculation unit 602 stores the abnormality flag in the storage unit 603 in association with the object distance.

The storage unit 603 stores object distances for three temporally-continuous times (that is, at three continuous rotation angles). The storage unit 603 also stores information indicating whether an abnormality flag is associated with the object distance. The storage unit 603 may be implemented by a volatile storage medium and/or a non-volatile storage medium.

The complement unit 604 outputs a second object distance among the three object distances stored in the storage unit 603. When an abnormality flag is associated with the second object distance among the three object distances stored in the storage unit 603, the complement unit 604 complements the second object distance using a first and/or third object distance and outputs the complemented second object distance. Although details of the processing will be described later, a highly reliable object distance is thereby output.

The motor control unit 605 controls a rotation speed of the motor 402. For example, the motor control unit 605 controls the motor 402 such that the rotation speed is constant.

### <Minimum Object Allowing Distance Measurement>

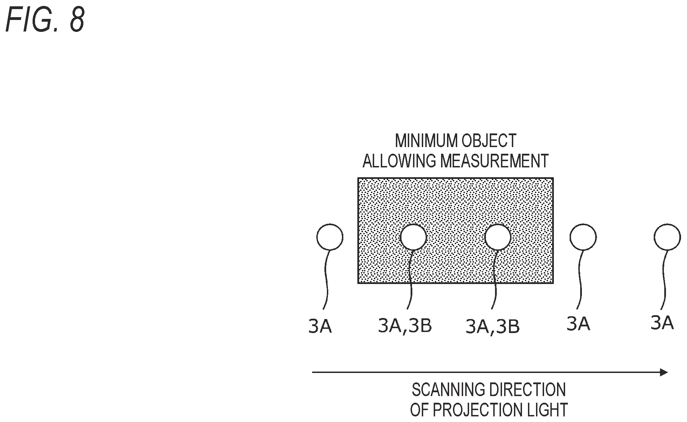

FIG. 8 is a diagram illustrating a minimum object allowing distance measurement according to the first embodiment.

When a difference between two adjacent object distances is less than a predetermined threshold, the distance calculation unit 602 adopts the object distances. That is, a size of a minimum measurable object is a size allowing reflection of two adjacent projection lights 3A, as illustrated in FIG. 8. In other words, an object having a size capable of reflecting only one projection light 3A is not detected as an object to be measured. Accordingly, the distance measurement device 1 is prevented from detecting minute dust, dirt, or the like in the air as an object to be measured.

### <Flowchart>

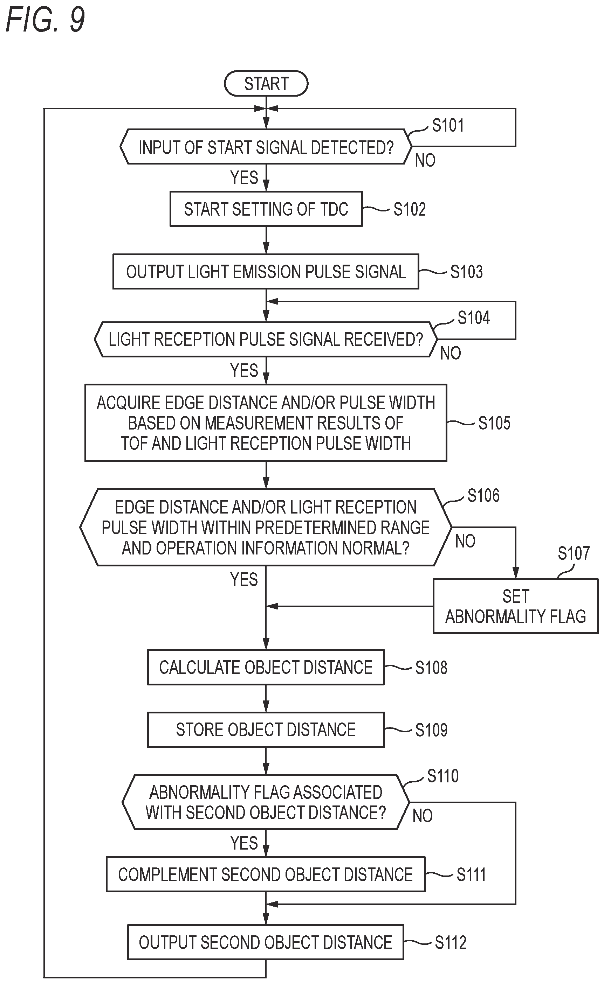

FIG. 9 is a flowchart illustrating a processing example of the controller 600 according to the first embodiment. Next, the processing performed by the controller 600 will be described with reference to FIG. 9.

The distance measurement control unit 601 waits until the start signal is received from the rotation position detector 403 (S101: NO), and advances the processing to the next step S102 at a timing when the input of the start signal is detected (S101: YES).

The distance measurement control unit 601 performs predetermined start setting (for example, initialization) on the TDC 500 (S102).

The distance measurement control unit 601 outputs a light emission pulse signal to the light emitting element 102 and the TDC 500 (S103).

The TDC 500 waits until the light reception pulse signal is received from the comparator 401 (S104: NO), and when the light reception pulse signal is received (S104: YES), the measurement results of the TOF and the light reception pulse width are output, and the processing proceeds to step S105.

The distance calculation unit 602 acquires the edge distance and/or the pulse width based on the measurement results of the TOF and the light reception pulse width received from the TDC 500 (S105). Then, the distance measurement control unit 601 acquires the operation information from the TDC 500, and determines whether to associate an abnormality flag with an object distance calculated later based on the operation information (S106). For example, when the number of rising edges and the number of falling edges of the light reception pulse signal do not match in the operation information, or when the edge distance or the light reception pulse width is out of a predetermined range, the TDC abnormality determination unit 611 of the distance measurement control unit 601 determines to associate an abnormality flag with the object distance after calculation.

When it is determined that an abnormality flag is not to be associated (S106: YES), the distance measurement control unit 601 advances the processing to step S108.

When it is determined that an abnormality flag is to be associated (S106: NO), the distance measurement control unit 601 sets the abnormality flag to be associated with the object distance to be calculated later (S107), and advances the processing to step S108.

The distance calculation unit 602 calculates the object distance based on the edge distance and the light reception pulse width (S108).

The distance calculation unit 602 stores the calculated object distance in the storage unit 603. At this time, when an abnormality flag is associated at the time of calculating the object distance, the distance calculation unit stores the abnormality flag in the storage unit 603 in association with the object distance (S109).

The storage unit 603 stores, in addition to an object distance calculated this time (hereinafter referred to as third object distance), at least an object distance calculated last time (hereinafter referred to as second object distance) and an object distance calculated before last (hereinafter referred to as first object distance).

The complement unit 604 determines whether an abnormality flag is associated with the second object distance stored in the storage unit 603 (S110).

When an abnormality flag is associated with the second object distance (S110: YES), the complement unit 604 complements the second object distance using the first object distance or the third object distance (S111). In this case, the second object distance is the object distance after complementation. Details of a complementation method will be described later. Then, the processing proceeds to step S112.

When an abnormality flag is not associated with the second object distance (S110: NO), the complement unit 604 advances the processing to step S112.

The complement unit 604 outputs the second object distance (S112). Then, the processing returns to step S101.

By the above processing, when an abnormality flag is associated with the second object distance, that is, when the reliability of the second object distance is low, the second object distance is output by being complemented to a highly reliable object distance.

### <Complementation Method of Second Object Distance>

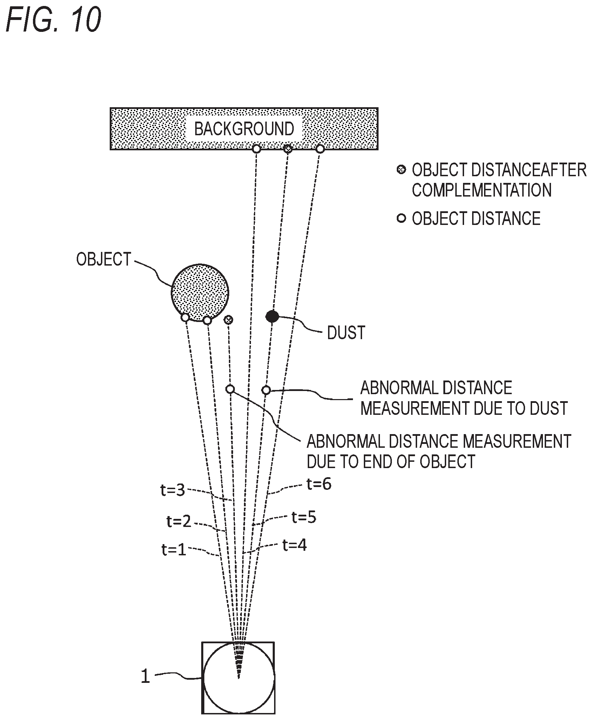

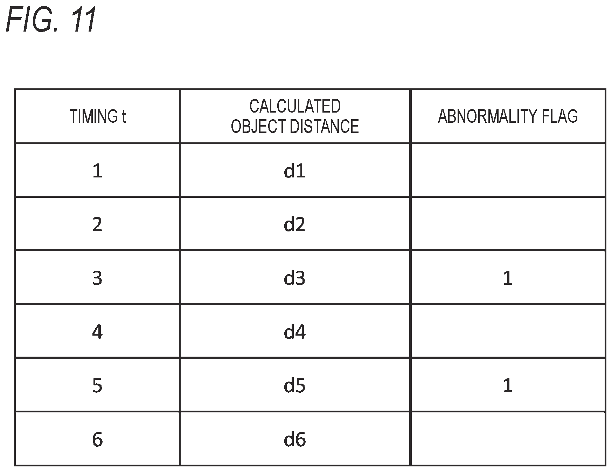

FIG. 10 is a diagram illustrating a complementation method when an abnormality flag is associated with the second object distance according to the first embodiment. FIG. 11 is a diagram illustrating a storage example of the first object distance, the second object distance, and the third object distance in the storage unit 603 according to the first embodiment. Next, a complementation method of the second object distance performed in step S113 of FIG. 9 will be described in detail with reference to FIGS. 10 and 11.

As illustrated in FIGS. 10 and 11, it is assumed that an object distance d1 at a rotation angle θ1 is measured at a timing t = 1, an object distance d2 at a rotation angle θ2 is measured at a timing t = 2, an object distance d3 at a rotation angle θ3 is measured at a timing t = 3, an object distance d4 at a rotation angle θ4 is measured at a timing t = 4, and an object distance d5 at a rotation angle θ5 is measured at a timing t = 5. Further, it is assumed that an abnormality flag is associated with the object distance d3 and the object distance d5. The rotation angle θ indicates an angle from a predetermined reference angle (0 degrees).

First, when t = 3, the storage unit 603 stores the object distance d1 when t = 1, the object distance d2 when t = 2, and the object distance d3 when t = 3. In this case, since an abnormality flag is not associated with the second object distance d2, the complement unit 604 outputs the object distance d2 as it is.

Next, when t = 4, the storage unit 603 stores the object distance d2 when t = 2, the object distance d3 when t = 3, and the object distance d4 when t = 4. In this case, since an abnormality flag is associated with the second object distance d3, the complement unit 604 complements the second object distance d3 using the adjacent first object distance d2 or third object distance d4 that is not associated with an abnormality flag. For example, when d2 < d4, the complement unit 604 replaces the second object distance d3 with d2 having a smaller object distance. That is, the complement unit 604 outputs d2 as the object distance when t = 4. Accordingly, it is possible to prevent the object distance d3 having low reliability from being output as it is. The reason why the second object distance is replaced with an adjacent object distance that is smaller is to give priority to safety when the distance measurement device 1 is used in a monitoring area or the like. Therefore, the second object distance may be replaced with an adjacent object distance that is larger, depending on the usage mode of the distance measurement device 1.

Next, when t = 5, the storage unit 603 stores the object distance d3 when t = 3, the object distance d4 when t = 4, and the object distance d5 when t = 5. In this case, since an abnormality flag is not associated with the second object distance d4, the complement unit 604 outputs the object distance d4 as it is.

Next, when t = 6, the storage unit 603 stores the object distance d4 when t = 4, the object distance d5 when t = 5, and the object distance d6 when t = 6. In this case, since an abnormality flag is associated with the second object distance d5, the complement unit 604 complements the second object distance d5 using the adjacent first object distance d4 or third object distance d6 that is not associated with an abnormality flag. For example, when d4 < d6, the complement unit 604 replaces the second object distance d5 with d4 having a smaller object distance. That is, the complement unit 604 outputs d4 as the object distance when t = 4. Accordingly, it is possible to prevent the distance measurement device 1 from outputting the object distance d4 having low reliability as it is.

### <When Two or More Abnormality Flags are Associated Continuously>

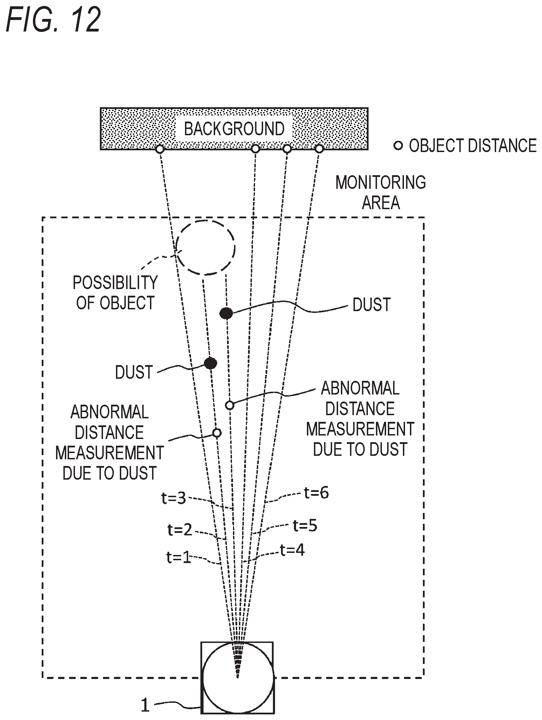

FIG. 12 is a diagram illustrating an operation example when two or more abnormality flags are associated continuously according to the first embodiment.

For example, as illustrated in FIG. 12, it is assumed that an abnormality flag is associated with the object distance d2 when t = 2, and an abnormality flag is also associated with the continuous object distance d3 when t = 3.

In this case, the complement unit 604 may output the object distance d3 as it is without performing complementation of the object distance described above. As illustrated in FIG. 12, the object distance d3 is not a distance to an object, but may be a distance to dust, dirt, or the like present in front of the object, but since there is a possibility that an object to be detected in the monitoring area is not visible due to dust or dirt, the dust, dirt, or the like is detected as an object with priority given to safety. However, the processing described with reference to FIG. 12 is not an essential function in the distance measurement device 1.

### <Modifications>

In the above-described embodiment, a second object distance associated with an abnormality flag is complemented by being replaced with a first object distance or a third object distance, but the complementation method is not limited thereto. For example, an average value of the first object distance and the third object distance may be calculated as the second object distance.

In the above-described embodiment, the storage unit 603 stores the object distances for three temporally-continuous times (for example, t = 1 to 3) (that is, at three continuous rotation angles), but may store the object distances for four times (for example, t = 1 to 4) or more.

In the above-described embodiment, the object distances for three temporally-continuous times (for example, t = 1 to 3) (that is, at three continuous rotation angles) are stored in the storage unit 603, and the second object distance associated with an abnormality flag is complemented, but a plurality of object distances associated with an abnormality flag may be complemented at once. That is, among a first object distance that is measured, a plurality of second object distances measured after the first distance, and a third object distance measured after the second object distance, when the first object distance and the third object distance are estimated to be not abnormal and the plurality of second object distances are estimated to be abnormal, the plurality of second object distances may be complemented using the first object distance or the third object distance. For example, an object distance of t = 2 and an object distance of t = 3 associated with an abnormality flag among object distances of four temporally-continuous times (for example, t = 1 to 4) may be complemented at once with an object distance of t = 1 or an object distance of t = 4.

### (Summary of First Embodiment)

The following techniques are disclosed based on the above description of the first embodiment.

### <Technique 1>

A distance measurement device (1) including: a light emitting element (102) configured to project projection light (3A) of a pulse wave; a light receiving element (103) configured to receive reflection light (3B) of the projection light reflected by an object; and a controller (600) configured to measure a distance to the object based on a time between a light emission timing of the light emitting element and a light reception timing of the light receiving element, in which among a first distance that is measured, at least one second distance measured after the first distance, and a third distance measured after the second distance, when the first distance and the third distance are estimated to be not abnormal and the second distance is estimated to be abnormal, the controller complements the second distance using the first distance or the third distance.

Accordingly, since the second distance estimated to be abnormal is complemented by the first distance or the third distance estimated not to be abnormal, it is possible to prevent the distance measurement device from outputting an erroneous distance.

### <Technique 2>

The distance measurement device according to technique 1, in which projection light used for measurement on the first distance, projection light used for measurement on the second distance, and projection light used for measurement on the third distance have different projection directions.

Accordingly, since complementation is performed with a distance to an object estimated not to be abnormal, which is measured with temporally and spatially adjacent projection light, a distance estimated to be abnormal can be complemented with high accuracy.

### <Technique 3>

The distance measurement device according to technique 1 or 2, in which the controller detects the object when at least two temporally adjacent distances are measured.

Accordingly, it is possible to prevent the distance measurement device from detecting minute objects such as dust and dirt.

### <Technique 4>

The distance measurement device according to any of techniques 1 to 3, in which a time between the light emission timing and the light reception timing is measured by a time to digital converter (TDC), and the controller estimates whether the measured distance is abnormal based on a measurement result of the TDC.

Accordingly, the controller can estimate whether the measured distance is abnormal based on the measurement result of the TDC.

### <Technique 5>

The distance measurement device according to any one of techniques 1 to 4, in which at the time of complementing the second distance, the controller complements the second distance using a smaller one of the first distance and the third distance.

Accordingly, the distance measurement device can perform highly safe complementation at the time of complementing a distance estimated to be abnormal.

### <Technique 6>

The distance measurement device according to any of techniques 1 to 5, in which the projection light is projected in a direction orthogonal to a predetermined axis as a rotation axis (C), and the projection directions being different from one another means that rotation angles at which the projection light is projected are different from one another.

Accordingly, the distance measurement device can scan a space of 360 degrees in a direction orthogonal to the rotation axis.

### <Technique 7>

A distance measurement method for measuring a distance to an object based on a time between a light emission timing at which a light emitting element (102) projects projection light (3A) of a pulse wave and a light reception timing at which a light receiving element (103) receives reflection light (3B) of the projection light reflected by the object, the method including: among a first distance that is measured, at least one second distance measured after the first distance, and a third distance measured after the second distance, when the first distance and the third distance are estimated to be not abnormal and the second distance is estimated to be abnormal, complementing the second distance using the first distance or the third distance.

Accordingly, since the second distance estimated to be abnormal is complemented by the first distance or the third distance estimated not to be abnormal, it is possible to prevent the distance measurement device from outputting an erroneous distance.

Although the embodiment has been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the embodiment described above may be combined freely in a range without departing from the gist of the invention.

The present application is based on a Japanese patent application filed on November 30, 2023 (Japanese Patent Application No. 2023-202864), and contents thereof are incorporated herein by reference.

### INDUSTRIAL APPLICABILITY

The technique of the present disclosure is useful for a device that measures a distance to an object.

### REFERENCE SIGNS LIST

1 DISTANCE MEASUREMENT DEVICE
3A PROJECTION LIGHT
3B REFLECTION LIGHT
10 OUTER COVER
11 WAVELENGTH WINDOW
100 FIXED PART
101 BOARD
102 LIGHT EMITTING ELEMENT
103 LIGHT RECEIVING ELEMENT
104 FOCUS LENS
105 COLLIMATOR LENS
106 COIL
107 PHOTOINTERRUPTER
300 ROTATION PART
301 ROTATION MEMBER
302 MAGNET
303 REFLECTING MIRROR
311 RIB
401 COMPARATOR
402 MOTOR
403 ROTATION POSITION DETECTOR
500 TDC
501 MEASUREMENT UNIT
502 DATA REGISTER
503 STATUS REGISTER
504 INPUT/OUTPUT I/F
600 CONTROLLER
601 DISTANCE MEASUREMENT CONTROL UNIT
602 DISTANCE CALCULATION UNIT
603 STORAGE UNIT
604 COMPLEMENT UNIT
605 MOTOR CONTROL UNIT
611 TDC ABNORMALITY DETERMINATION UNIT

## Claims

1. A distance measurement device comprising:
a light emitting element configured to project projection light of a pulse wave;
a light receiving element configured to receive reflection light of the projection light reflected by an object; and
a controller configured to measure a distance to the object based on a time between a light emission timing of the light emitting element and a light reception timing of the light receiving element, wherein
among a first distance that is measured, at least one second distance measured after the first distance, and a third distance measured after the second distance, when the first distance and the third distance are estimated to be not abnormal and the second distance is estimated to be abnormal, the controller complements the second distance using the first distance or the third distance.

2. The distance measurement device according to claim 1, wherein
projection light used for measurement on the first distance, projection light used for measurement on the second distance, and projection light used for measurement on the third distance have different projection directions.

3. The distance measurement device according to claim 1, wherein
the controller detects the object when at least two temporally adjacent distances are measured.

4. The distance measurement device according to claim 1, wherein
a time between the light emission timing and the light reception timing is measured by a time to digital converter (TDC), and
the controller estimates whether the measured distance is abnormal based on a measurement result of the TDC.

5. The distance measurement device according to claim 1, wherein
at the time of complementing the second distance, the controller complements the second distance using a smaller one of the first distance and the third distance.

6. The distance measurement device according to any of claims 1 to 5, wherein
the projection light is projected in a direction orthogonal to a predetermined axis as a rotation axis, and
the projection directions being different from one another means that rotation angles at which the projection light is projected are different from one another.

7. A distance measurement method for measuring a distance to an object based on a time between a light emission timing at which a light emitting element projects projection light of a pulse wave and a light reception timing at which a light receiving element receives reflection light of the projection light reflected by the object, the method comprising:
among a first distance that is measured, at least one second distance measured after the first distance, and a third distance measured after the second distance, when the first distance and the third distance are estimated to be not abnormal and the second distance is estimated to be abnormal, complementing the second distance using the first distance or the third distance.
